# EUROPÄISCHE PATENTSCHRIFT

(11) **EP 2 965 843 B1**
(45) Veröffentlichungstag und Bekanntmachung des Hinweises auf die Patenterteilung: **31.08.2016**
(21) Anmeldenummer: 15162893.0
(22) Anmeldetag: 09.04.2015
(51) Int. Cl.: B23B 31/20, B23B 31/40, B23B 31/26

(54) **SPANNFUTTER UND SPANNMITTEL MIT SCHNELLWECHSELFUNKTION**
COLLET CHUCK AND CLAMPING MEANS WITH QUICK CHANGE FUNCTION
MANDRIN ET DISPOSITIF DE SERRAGE DOTÉ DE FONCTION DE CHANGEMENT RAPIDE

(30) Priorität: 08.07.2014 DE 102014109546
(43) Veröffentlichungstag der Anmeldung: 13.01.2016
(73) Patentinhaber: Röhm GmbH, 89567 Sontheim (DE)
(72) Erfinder: Derheim, Waldemar, 78056 Villingen-Schwenningen (DE)
(74) Vertreter: Hentrich Patentanwälte PartG mbB

(56) Entgegenhaltungen:
- US-A- 4 688 810
- US-A- 6 149 357

## Beschreibung

Die Erfindung betrifft ein Spannfutter gemäß dem Oberbegriff des Anspruchs 1, mit einem eine Führungsöffnung und ein Stellglied aufweisenden Futterkörper und mit mindestens einem austauschbaren Spannmittel, das in die Führungsöffnung einführbar ist. Darüber hinaus betrifft die Erfindung ein Spannmittel gemäß dem Oberbegriff des Anspruchs 9, mit einem Spannmittelkörper, einem im Spannmittelkörper befindlichen Zapfenkörper und einem Spannelement.

Ein derartiges Spannfutter ist, zum Beispiel aus der US-A-6149357 bekannt. Derartige Spannfutter sind aus der Praxis bekannt und werden vom Anmelder mit der Bezeichnung KZZT angeboten. Derartige Spannmittel, in diesem Fall ein Spanndorn, sind ebenfalls aus der Praxis bekannt und werden vom Anmelder unter der Bezeichnung ABSIS angeboten. Für einen Wechsel des Spannmittels muss im Normalfall die Zugverbindung mit einem Spezialschlüssel von der Zugstange gelöst werden. Im Anschluss muss das andere Spannmittel auf die Zugverbindung gesetzt werden, positioniert werden bis die Befestigungsbohrungen passen und dann mittels Schrauben fixiert werden. Eine alternative Montage ist über einen Bajonettverschluss zwischen Zugstange und Spannmittel möglich. Dabei wird das Spannmittel um einen Öffnungswinkel des Bajonetts verdreht angesetzt und auf die Befestigungsbohrungen gedreht und befestigt. Beide Varianten sind aufgrund der komplizierten Ausrichtung des Spannmittels zum Spannfutter vor der Montage, sowie aufgrund der Notwendigkeit der Verwendung von Spezialwerkzeug aufwendig. Darüber hinaus bedeutet ein Wechsel der Art des Spannmittels z.B. der Wechsel von einer Spannzange zu einem Spanndorn, dass sowohl das eigentliche Spannmittel gewechselt werden muss als auch das Spannfutter, das heißt es müssen bei einem Spannmittelwechsel zwei Bauteile gewechselt werden.

Der Erfindung liegt daher die Aufgabe zugrunde ein Spannfutter der eingangs genannten Art zu konstruieren, bei dem ein rascher Wechsel des Spannmittels ermöglicht wird. Gleichzeitig soll das Spannfutter so ausgebildet sein, dass auch verschiedene Spannmittel mit unterschiedlichen Verschlusssystemen einfach und rasch montiert werden können. Darüber hinaus dient die Erfindung einem Spannmittel mit einem Verschlusssystem, welches besonders schnell auf ein Spannfutter montiert werden kann.

Diese Aufgabe wird nach der Erfindung bei einem Spannfutter der eingangs genannte Art dadurch gelöst, dass dem Spannmittel eine Drehscheibe mit einem Sperrglied zugeordnet ist, das beim Einführen des Spannmittels in die Führungsöffnung die Drehscheibe gegen Verdrehen gegenüber dem Futterkörper sichert, und dass bei einer Drehung des Spannmittels um die Längsachse in der Führungsöffnung mittels der Relativdrehung zu der Drehscheibe ein Segment nach außen zum Futterkörper verstellbar ist und der lösbaren Festlegung des Spannmittels am Futterkörper dient.

Durch die Erfindung wird der Wechsel von Spannmitteln in einem Spannfutter deutlich vereinfacht und beschleunigt, da das Sperrglied die Lage und Orientierung des Spannmittels zum Spannfutter beim Einführen in die Führungsöffnung festlegt. Gleichzeitig wird das Spannmittel nicht nur durch Verdrehen wie bei einem herkömmlichen Bajonettverschluss fixiert, sondern zusätzlich durch ein Segment nach außen im Futterkörper verkeilt. Zum Wechsel werden keine Spezialwerkzeuge benötigt und gleichzeitig erlaubt es der Aufbau des Spannfutters, das verschiedene Verschlusssysteme von unterschiedlichen Spannmitteln aufgenommen werden können.

Im Rahmen der Erfindung ist weiterhin vorgesehen, dass der Futterkörper eine radial ausgebildete Sperrgliedaufnahme für das seitlich aus der Drehscheibe herausragende Sperrglied aufweist. Dadurch wird eine einfache Ausrichtung des Spannmittels zum Spannfutter beim Einführen in die Führungsöffnung erreicht. Dabei ist es denkbar, statt eines bloßen Rastsitzes mit einer Mulde für das Sperrglied eine nach oben offene Sperrgliedaufnahme auszubilden, um ein einfaches Einführen des Sperrgliedes in seitliche Begrenzungsstege zu ermöglichen. Alternativ wäre auch ein Rastsitz mit einer Feder als Ausführungsform denkbar. Als günstig hat es sich erwiesen, das Sperrglied in Form eines Stiftes oder eines Zapfens auszubilden. Auch die Ausbildungsform einer Kugel wäre möglich.

Weiterhin hat es sich als günstig erwiesen, wenn das Segment und die Drehscheibe ein koppelndes Lagerglied aufweisen, wenn das Spannmittel ein Deckel mit einem Führungslangloch besitzt und wenn das Segment ein Führungsmittel aufweist, das bei einer Drehbewegung des Spannmittels im Führungslangloch verstellt wird. Nach Einführen des Spannmittels in die Führungsöffnung kann das Spannmittel um seine Längsachse verstellt werden, wobei die Drehlage der Drehscheibe durch das Sperrglied gegenüber dem Futterkörper festgelegt ist. Durch die Kopplung des Segments und der Drehscheibe mittels Lagerglied wird eine Relativbewegung des Segments und der Drehscheibe bei der Drehung des Spannmittels ermöglicht Dabei bewirkt die Verstellung des Führungsmittels im Führungslangloch bei der Drehbewegung des Spannmittels eine Verstellung des Segments nach außen zur Wechselwirkung mit dem Futterkörper, wobei die Drehachse des Segmentes durch das Lagerglied festgelegt wird. Als vorteilhaft hat es sich erwiesen, das Lagerglied in Form eines Zapfens oder eines Stiftes auszubilden

Im Rahmen der Erfindung hat es sich auch als vorteilhaft erwiesen, wenn das Segment als Rastklinke in Form eines Teilkreissegmentes gebildet ist. Dabei dienen die Rastklinke als Verbindung zwischen dem Stellglied des Spannfutters und dem Spannmittel. Alternativ oder ergänzend dienen die Rastklinken als Sicherung des Spannmittels im Spannfutter, indem nach außen Druck auf das Stellglied zur Erzeugung eines Reibungsschlusses ausgeübt wird.

Ganz besonders bevorzugt ist es weiterhin, wenn eine Nut im Stellglied ausgebildet ist, die der Aufnahme des nach außen verstellbaren Segments dient. Die Nut sorgt dabei dafür, dass bei Betätigung des Stellglieds im Spannfutter die Betätigungsmechanik im Spannmittel über Anlage der Berührungsflächen mitgenommen wird und so das Spannmittel gespannt wird. Alternativ und ergänzend besteht der Vorteil einer Nut, in die das Segment aufgenommen werden kann, in einer zusätzlichen Verstärkung der Fixierung des Segments und damit des Spannmittels durch einen Formschluss.

Im Rahmen der Erfindung weiterhin bevorzugt ist es, wenn das Segment gleichmäßig über den Umfang verteilt, in mehrfacher Ausführung mit einer korrespondierenden Anzahl von Führungsmitteln und Lagergliedern versehen, vorgesehen ist. Der Deckel besitzt dabei eine der Führungsmittel äquivalente Anzahl an Führungslanglöchern und das Stellglied eine korrespondierende Anzahl an Nuten, oder eine radial über den inneren Umfang des Stellglieds verlaufende Nut. Hierbei ist eine bevorzugte Ausführungsform, das Segment aus drei, über den Umfang verteilten, ringförmigen Rastklinken auszubilden, wobei die jeweiligen Enden aneinander angepasst sind, so dass eine platzsparende Anordnung möglich ist. In einer bevorzugten Ausführungsform sind die Rastklinken an einem Ende abgerundet und besitzen am anderen Ende eine dazu passende abgerundete Klinkenaufnahme. Um die Rastklinken durch Drehen nach außen zu verstellen, muss jede Rastklinke eine korrespondierende Anzahl an Führungsmitteln und der Deckel eine entsprechende Anzahl an Führungslanglöchern aufweisen. Dabei haben sich jeweils ein Führungsmittel, ein Lagerglied und ein Führungslangloch pro Rastklinke als vorteilhaft erwiesen. Darüber hinaus muss die Anzahl der Nuten an die Anzahl der Rastklinken angepasst werden, wobei es sich für die Fertigung als vorteilhaft erwiesen hat, wenn die Nuten zu einer radial entlang des inneren Umfangs des Stellkörpers angeordneten Ringnut zusammengefasst werden. Eine Alternative zu den ringförmig über den Umfang verteilten Rastklinken stellen zwei gegenüberliegende Rastelemente dar. Denkbar wäre, diese nicht durch Führungsmittel, die innerhalb eines Führungslanglochs verstellt werden, nach außen zu verstellen, sondern über eine drehbar gelagerte, in der selben Ebene wie die Rastklinken liegende 3-dimensionale Form, beispielsweise einem Quader oder einem Prisma, deren Seiten die Rastelemente durch Drehung nach außen schieben. Alternativ wären auch federgelagerte Rastelemente denkbar, die sich nach dem Einführen in das Spannfutter nach außen verstellen.

Hinsichtlich der Einfachheit der Ausrichtung des Spannmittels beim Einführen in das Spannfutter ist es günstig, dass der Futterkörper ein Fixiermittel besitzt und dass ein Spannmittelkörper des Spannmittels eine Führungsnut aufweist, die eine translatorische und rotatorische Verstellung des Fixiermittels des Sperrmittels ermöglicht. Der Vorteil hierbei liegt in einer Vereinfachung der Ausrichtung des Spannmittels. Eine bevorzugte Ausführungsform des Fixiermittels stellt eine Schraube dar, allerdings wäre auch ein Stift oder Zapfen als Ausführungsform denkbar. Als vorteilhaft hat es sich zudem für die Ausbildung der Führungsnut erwiesen, wenn der Teil der Führungsnut, der den translatorischen Teil der Bewegung ermöglicht, achsparallel zum Spannmittel verläuft und die Führungsnut dann für die Drehbewegung einen rechten Winkel aufweist.
Zusätzlich kann mit Hilfe des Fixiermittels auch ein Spannmittel mit einem anderen Verschlusssystem, das heißt ohne Drehbewegung und ohne verkeilende Rastklinken im selben Spannfutter fixiert werden. Dazu wird das alternative Spannmittel in die Führungsöffnung des Spannfutters geschoben. Das Spannmittel weist an Stelle einer Führungsnut mit translatorischem- und rotatorischem Bereich eine achsparallel zur Längsachse des Spannmittels verlaufende Spannmittelaussparung auf, in die das Fixiermittel des Spannfutters hineinragen kann. Die Fixierung erfolgt dann durch das Anziehen einer Zugstange, die ein Stellglied verstellt, das mit dem Spannmittel in Verbindung steht.

Im Rahmen der Erfindung ist es weiterhin vorgesehen, dass das Spannmittel ein federndes Druckstück in einer Druckstückaufnahme besitzt, das bei der Drehung des Spannmittels relativ zur Drehscheibe in eine Aussparung der Drehscheibe gleitet und der Ausrichtung der Drehscheibe und des Sperrgliedes gegenüber dem Spannfutter dient und somit die Vormontage vereinfacht.

Darüber hinaus wird die das Spannmittel betreffende Aufgabe nach der Erfindung bei einem Spannmittel der eingangs genannten Art dadurch gelöst, dass am gegenüberliegenden Ende des Spannelements eine Verschließeinheit angeordnet ist, die der Zapfenkörper trägt, und dass die Verschließeinheit aus einer Anordnung von einer Drehscheibe, der ein Sperrglied zugeordnet ist, mindestens einem nach außen verstellbaren Segment und einem Deckel besteht.

Insbesondere ist es vorteilhaft, dass der Deckel mittels eines Verbindungsgliedes mit dem Zapfenkörper zur Ausrichtung des Deckels verbunden ist und damit der Ausrichtung der Führungslanglöcher dient.

Im Folgenden wird die Erfindung an zwei in der Zeichnung dargestellten Ausführungsbeispielen näher erläutert; es zeigen:
- Fig. 1: einen Längsschnitt des erfindungsgemäßen Spannfutters und des Spannmittels in verriegelter Stellung,
- Fig. 2: eine der Fig. 1 entsprechende Darstellung des erfindungsgemäßen Spannfutters in entriegelter Stellung,
- Fig. 3: eine der Fig. 2 entsprechende perspektivische Darstellung, teilweise geschnitten, des Spannfutters und des Spannmittels in entriegelter Stellung,
- Fig. 4: eine der Fig. 1 entsprechende perspektivische Darstellung, teilweise geschnitten, des Spannfutters und des Spannmittels in verriegelter Stellung,
- Fig. 5: den Schnitt V-V aus Fig. 2,
- Fig. 6: den Schnitt VII-VII aus Fig. 1,
- Fig. 7: eine perspektivische Darstellung, teilweise geschnitten, der Verschließeinheit des Spannmittels mit dem Druckstück,
- Fig. 8: ein Spannfutter nach Fig. 1 mit einem alternativen Spannmittel,
- Fig. 9: einen Längsschnitt des erfindungsgemäßen isolierten Spannmittels mit Verschließeinheit und
- Fig. 10: eine perspektivische Darstellung des erfindungsgemäßen Spannmittels mit nach außen verstellten Rastklinken.

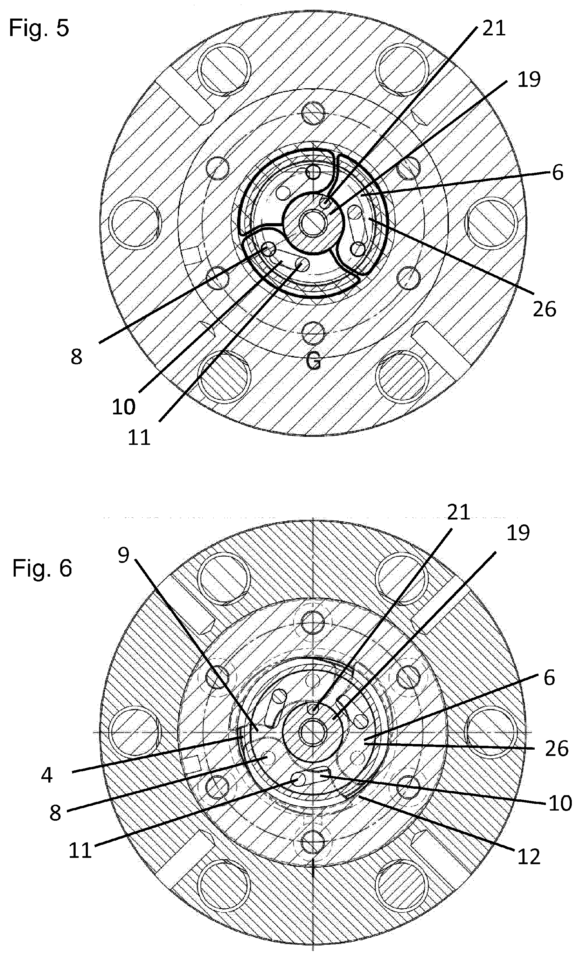

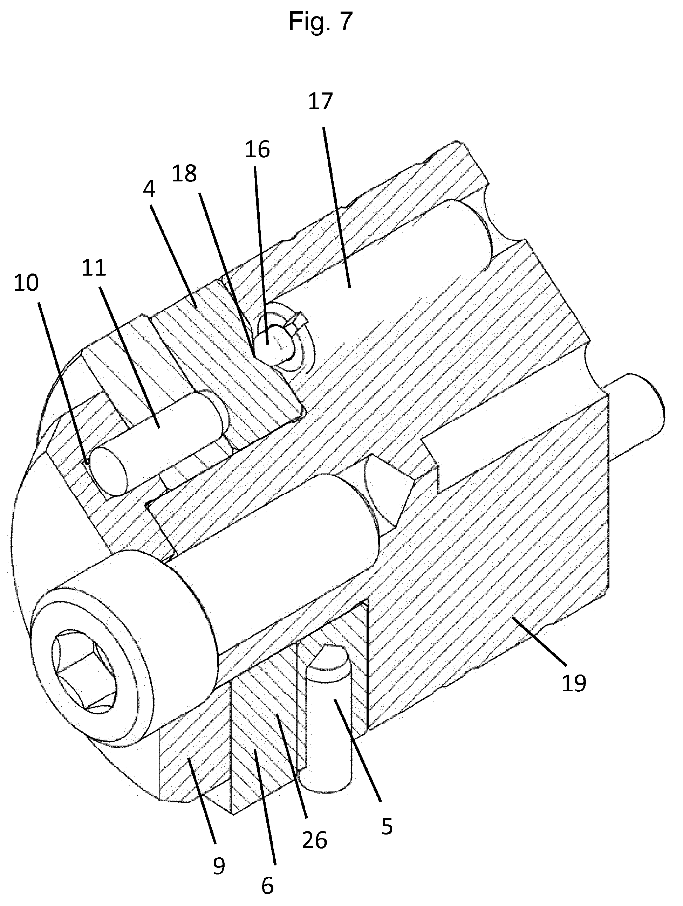

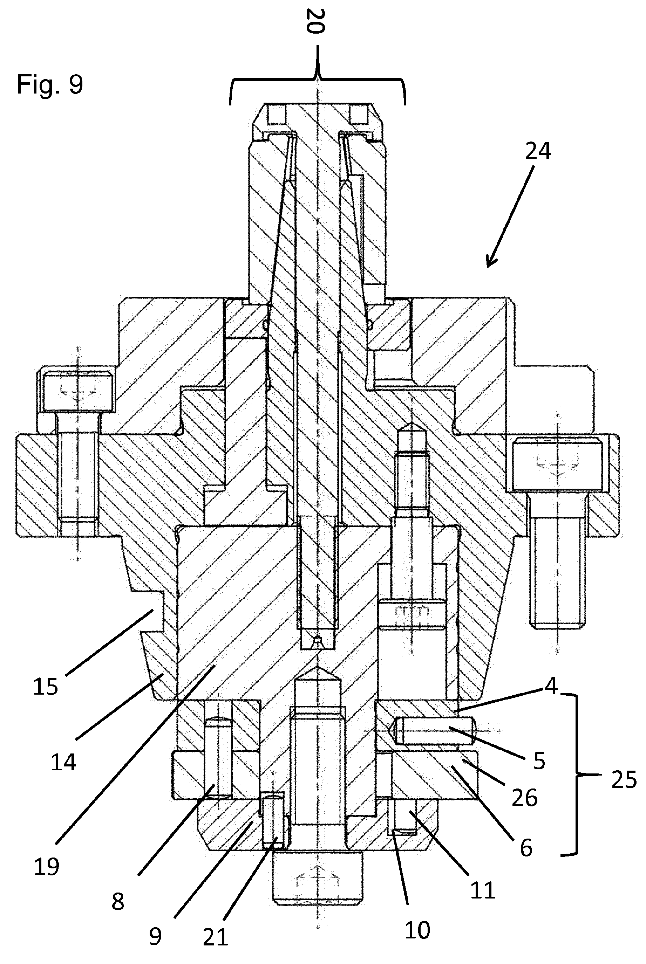

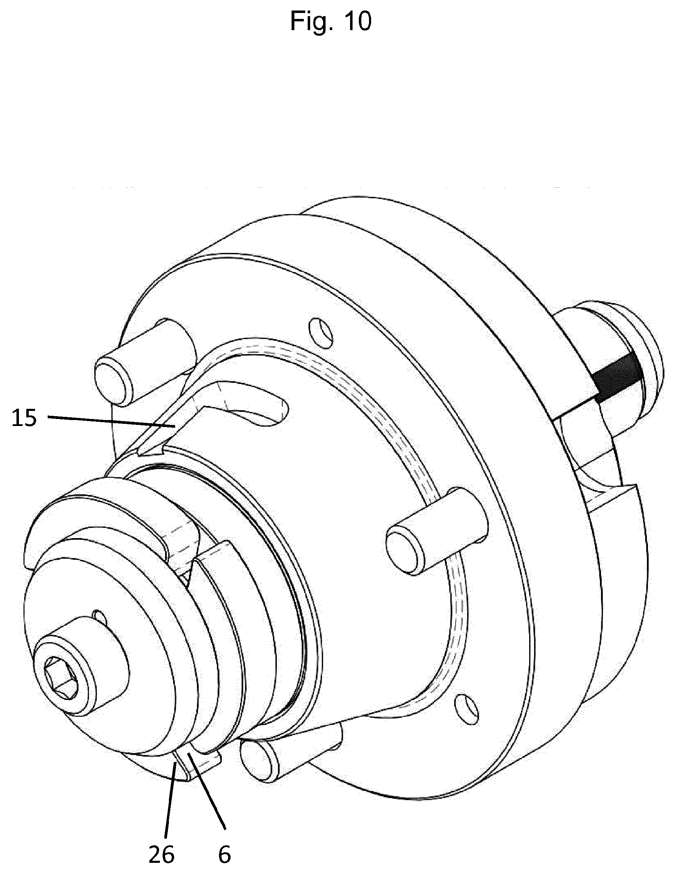

Die Fig. 9 zeigt ein Spannmittel 24, in diesem Fall einen Spanndorn, welches mit einem Spannfutter 23 fixiert werden kann und dem Spannen eines Werkzeuges dient. Das Spannmittel 24 weist einen konusförmig ausgebildeten Spannmittelkörper 14, ein Spannelement 20, in diesem Fall einem Spanndorn und eine Verschließeinheit 25 auf. Im Spannmittelkörper ist eine Führungsnut 15 ausgebildet, die in einem translatorischen Bereich 15.1 achsparallel zur Längsachse des Spannmittels 24 verläuft, und an den im rechten Winkel ein rotatorischer Bereich 15.2 anschließt. Die Verschließeinheit 25 wird von einem Zapfenkörper 19 getragen und besteht aus einem Deckel 9, einem Segment 6 und einer Drehscheibe 4. Aus der Drehscheibe ragt seitlich ein Sperrglied 5 in Form eines Zapfens heraus. Die Drehscheibe 4 wird mittels eines Lagerglieds 8 mit dem Segment 6 verbunden. Das Segment 6 ist in dem gezeigten Ausführungsbeispiel, wie in Fig. 10 dargestellt, aus drei Rastklinke 26 aufgebaut, die nach außen schwenkbar sind. Wie in Fig. 5 deutlich wird, sind die Rastklinken 26 für eine platzsparende Anordnung an einem Ende abgerundet und weisen am anderen Ende eine dazu passende abgerundete Klinkenaufnahme auf. Fig. 9 zeigt außerdem, dass jeder Rastklinken 26 je ein Lagerglied 8 und ein Führungsmittel 11 zugeordnet ist. Die drei Führungsmittel 11 befinden sich jeweils in dazu passenden Führungslanglöchern 10 des Deckels 9 und können in ihnen verstellt werden. Darüber hinaus ist der Deckel 9 mit einem Verbindungsglied 21 mit dem Zapfenkörper 19 verbunden, der der richtigen Ausrichtung des Deckels 9 und damit der Führungslanglöcher 10 dient. Wie aus Fig. 7 ersichtlich wird, weist der Zapfenkörper 19 ein federndes Druckstück 16 in einer Druckstückaufnahme 17 auf, das sich in einer Aussparung 18 der Drehscheibe 4 befindet.

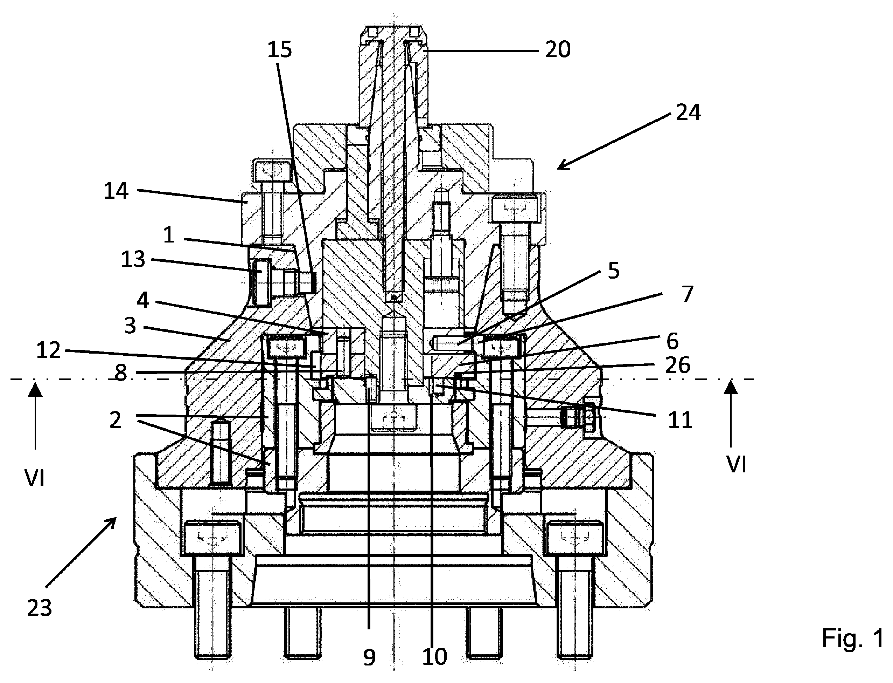

Die Fig. 1 zeigt das Spannfutter 23 mit einem Futterkörper 3 und einer Führungsöffnung 1, in die das in Fig. 9 isoliert dargestellte vorstehend erläuterte Spannmittel 24 eingeführt und fixiert ist. Im Futterkörper 3 kann das Spannmittel 24 mittels eines Stellgliedes 2, welches aus Fertigungsgründen mehrteilig aufgebaut ist, über eine Zugstange verstellt werden. Das Stellglied 2 weist eine ringförmige Nut 12, sowie eine nach oben geöffnete Sperrgliedaufnahme 7 auf. Darüber hinaus weist das Spannfutter 23 ein Fixiermittel 13 in Form einer Schraube auf, die durch eine Gewindebohrung ragt.

Vor der Montage wird das Spannmittel 24 richtig ausgerichtet. Dazu wird die Verschließeinheit 25, bestehend aus Deckel 9, Segment 6 und Drehscheibe 5, entgegen dem Zapfenkörper 19 des Spannmittels 24 gedreht, bis das Druckstück 16 in die Aussparung 18 der Drehscheibe gleitet. Dadurch ist die winklige Ausrichtung des Sperrglieds 5 zum Spannmittel 24 festgelegt (Fig. 7).

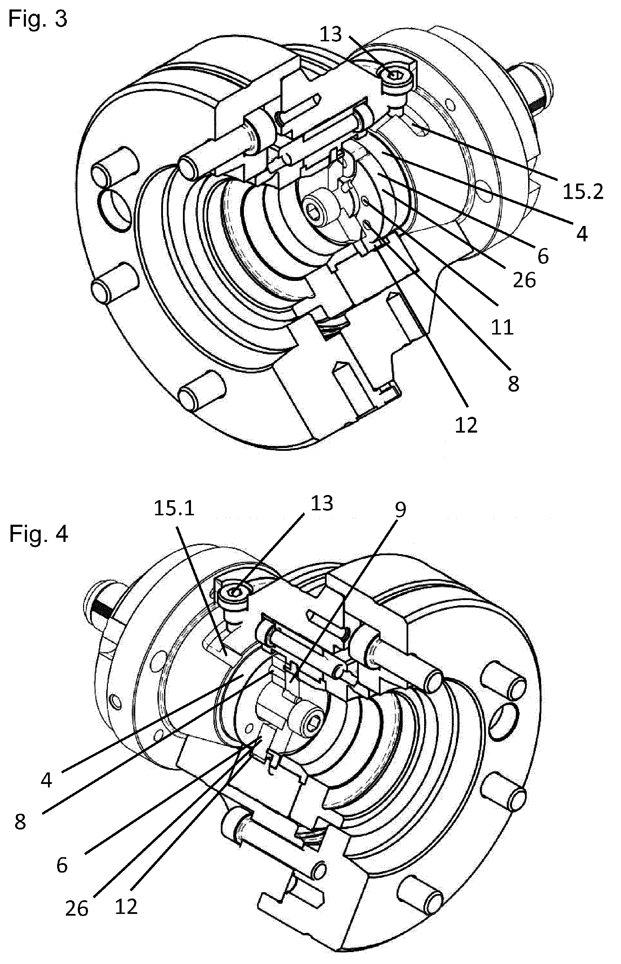

Fig. 3 verdeutlicht die Rolle des Fixiermittels 13 des Spannfutters 23 und der Führungsnut 15 des Spannmittels 24 beim Einführen des Spannmittels 24 über eine Translationsbewegung in das Spannfutter 23. Durch das Einführen des Fixiermittels 13 in den translatorischen Bereich 15.1 der Führungsnut 15 des Spannmittels 24 ist eine einfache Ausrichtung des Spannmittels 24 zum Spannfutter 23 gewährleistet. Wenn das Fixiermittel 13 das Ende des translatorischen Bereiches 15.1 erreicht hat, d.h. das Spannmittel 24 eingeführt ist, gleitet das Sperrglied 5, wie in Fig. 1 ersichtlich, in die Sperrgliedaufnahme 7 des Spannfutters 23.

Zur Fixierung des Spannmittels 24 im Spannfutter 23 wird das Spannmittel 24 gedreht, wodurch, wie in Fig. 4 dargestellt, das Fixiermittel 13 sich im rotatorischen Bereich 15.2 der Führungsnut 15 befindet. Fig. 1 zeigt, dass bei der Drehbewegung des Spannmittels 24 die Rastklinken 26 nach außen in die Nut 12 des Spannfutters 23 geschoben werden, wodurch eine Fixierung des Spannmittels 24 durch Formschluss erreicht wird.
Damit die Rastklinken 26 nach außen geschoben werden können, muss eine Relativbewegung innerhalb der Verschließeinheit 25 erreicht werden. Dies wird ermöglicht, indem das Sperrglied 5 in der Sperrgliedaufnahme 7 die Drehscheibe 4 gegen Verdrehung bei Drehung des Spannmittels 24 sichert. Die Relativbewegung wird zudem dadurch ermöglicht, dass die Rastklinken 26 jeweils über ein Lagerglied 8 mit der Drehscheibe 4 verbunden sind. Bei einer Drehung des Spannmittels 24 wird so die Drehscheibe aufgrund des Sperrglieds 5 in der Sperrgliedaufnahme 7 festgehalten, während die Rastklinken 26 aufgrund der Kopplung durch die Lagerglieder 8 in einer Relativbewegung zu der Drehscheibe 4 nach außen geschoben werden. Dabei wird die Drehachse 4 der Rastklinken 26 durch die Lagerglieder 8 festgelegt. Gleichzeitig wird die Verstellung der Rastklinken 26 nach außen dadurch erreicht, dass bei der Drehung des Spannmittels 24 die Führungsmittel 11 der Rastklinken 26 innerhalb der Führungslanglöcher 10 des Deckels 9 verstellt werden.

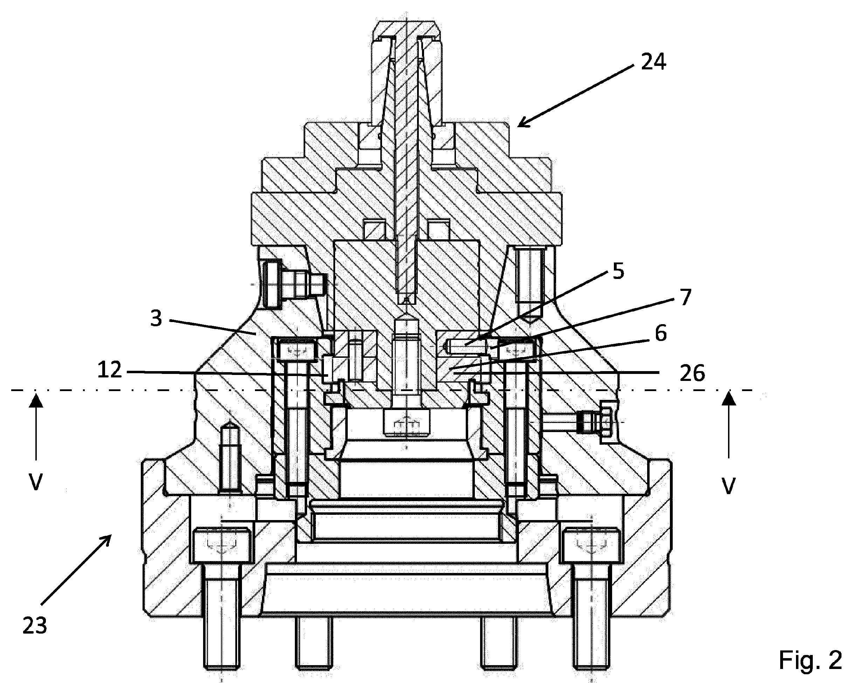

Zum Wechseln des Spannmittels 24 bzw. zum Entriegeln, wird das Spannmittel 24 in entgegengesetzte Richtung gedreht, das Fixiermittel 13 wird innerhalb des rotatorischen Bereichs 15.2 der Führungsnut 15 verstellt und die Führungsmittel 11 werden in den Führungslanglöchern 10 verschoben. Dadurch schwenken die Rastklinken 26, wie in Fig. 2 dargestellt, nach innen und befinden sich nicht mehr in der Nut 12. Das Entfernen des Spannmittels 24 aus dem Spannfutter 23 geschieht durch eine Translationsbewegung des Spannmittels 24, wobei das Sperrglied 5 aus der Sperrgliedaufnahme 7 gleitet.

In Fig. 5 und Fig. 6 werden jeweils die Schnitte V-V von Fig. 2. und VI-VI von Fig. 1 der Spannmittel 24 und des Spannfutters 23 in entriegelter und verriegelter Position miteinander verglichen. Beim Drehen des Spannmittels 24 wird sowohl der Zapfenkörper 19, als auch das Verbindungsglied, welches Deckel 9 und Zapfenkörper 19 koppelt, verdreht. Die Drehscheibe 4 wird bei der Drehbewegung durch das Sperrglied 5 festgehalten, die Führungsmittel 11 werden innerhalb der Führungslanglöcher 10 verstellt, wodurch die drei Rastklinken 26 nach außen in die Nut 12 geschoben werden (vgl. Fig. 6). In Fig. 5 ist die entriegelte Stellung dargestellt, d.h. die Rastklinken 26 sind nach innen geschwenkt.
Fig. 5 und Fig. 6 verdeutlichen darüber hinaus, dass jedes Segment 6 über ein Führungsmittel 11 und ein Lagerglied 8 verfügt. Die Lagerglieder 8 koppeln die Rastklinken 26 mit der Drehscheibe 4, wodurch die Relativdrehung innerhalb der Verschließeinheit 25 ermöglicht wird. Gleichzeitig wird durch die Lagerglieder 8 die Drehachse festgelegt.

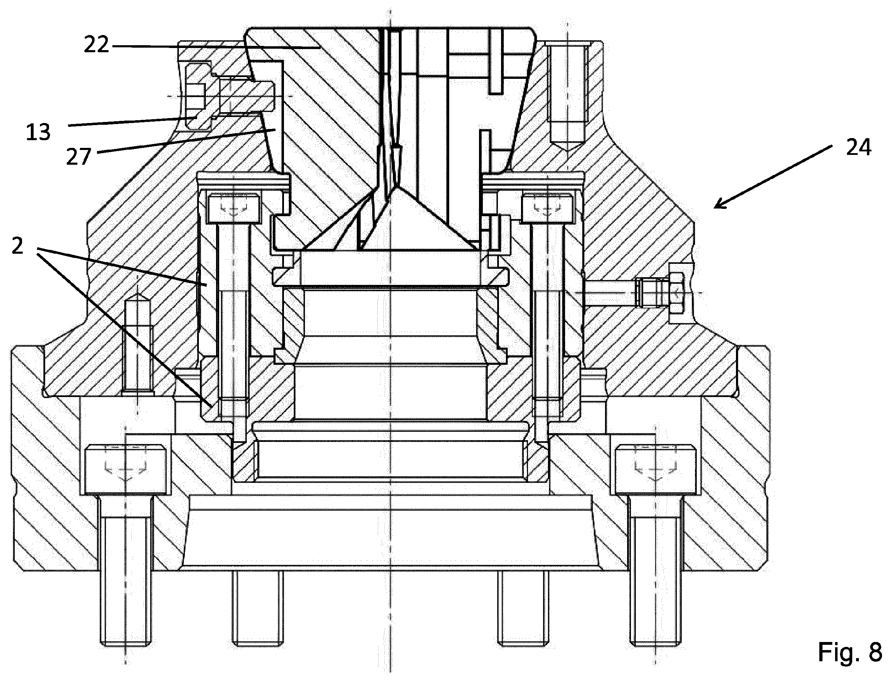

In Fig. 8 wird verdeutlicht, dass das erfindungsgemäße Spannfutter 23 auch dafür geeignet ist, ein anderes Spannmittel 24, in diesem Fall eine Spannzange 22, aufzunehmen, ohne dass ein Spannfutterwechsel von Nöten ist. Darüber hinaus wird verdeutlicht, dass das Spannfutter 23 auch mit einem anderen Verschlusssystem, das heißt ohne Drehen und ohne verkeilende Rastklinken 26 funktionieren kann. Nach dem Einführen der Spannzange 22 in das Spannfutter 23 ragt das Fixiermittel 13 in eine Spannmittelaussparung 27. Die Spannung geschieht durch das Anziehen einer in der Zeichnung nicht näher dargestellten Zugstange, die das Stellglied 2 verstellt, das mit der Spannzange 22 bzw. dem Spannmittel 24 in Verbindung steht.

### Bezugszeichenliste

- 1: Führungsöffnung
- 2: Stellglied
- 3: Futterkörper
- 4: Drehscheibe
- 5: Sperrglied
- 6: Segment
- 7: Sperrgliedaufnahme
- 8: Lagerglied
- 9: Deckel
- 10: Führungslangloch
- 11: Führungsmittel
- 12: Nut
- 13: Fixiermittel
- 14: Spannmittelkörper
- 15: Führungsnut
- 15.1: Translatorischer Bereich der Führungsnut
- 15.2: Rotatorischer Bereich der Führungsnut
- 16: Druckstück
- 17: Druckstückaufnahme
- 18: Aussparung
- 19: Zapfen körper
- 20: Spannelement
- 21: Verbindungsglied
- 22: Spannzange
- 23: Spannfutter
- 24: Spannmittel
- 25: Verschließeinheit
- 26: Rastklinken
- 27: Spannmittelaussparung

## Patentansprüche

1. Spannfutter (23) mit einem eine Führungsöffnung (1) und ein Stellglied (2) aufweisenden Futterkörper (3) und mit mindestens einem austauschbaren Spannmittel (24), das in die Führungsöffnung (1) einführbar ist, **dadurch gekennzeichnet, dass** dem Spannmittel (24) eine Drehscheibe (4) mit einem Sperrglied (5) zugeordnet ist, das beim Einführen des Spannmittels (24) in die Führungsöffnung (1) die Drehscheibe (4) gegen Verdrehen gegenüber dem Futterkörper (3) sichert, und dass bei einer Drehung des Spannmittels (24) um die Längsachse in der Führungsöffnung (1) mittels der Relativdrehung zu der Drehscheibe (4) ein Segment (6) nach außen zum Futterkörper (3) verstellbar ist zur lösbaren Festlegung des Spannmittels (24) am Futterkörper (3).

2. Spannfutter (23) nach Anspruch 1, **dadurch gekennzeichnet, dass** der Futterkörper (3) eine radial ausgebildete Sperrgliedaufnahme (7) für das seitlich aus der Drehscheibe (4) herausragende Sperrglied (5) aufweist.

3. Spannfutter (23) nach einem der Ansprüche 1 und 2, **dadurch gekennzeichnet, dass** das Segment (6) und die Drehscheibe (4) ein koppelndes Lagerglied (8) aufweisen, dass das Spannmittel (24) einen Deckel (9) mit einem Führungslangloch (10) besitzt und dass das Segment (6) ein Führungsmittel (11) aufweist, das bei einer Drehbewegung des Spannmittels (24) im Führungslangloch (10) verstellt wird.

4. Spannfutter (23) nach einem der Ansprüche 1 bis 3, **dadurch gekennzeichnet, dass** das Segment (6) als Rastklinke (26) in Form eines Teilkreissegmentes gebildet ist.

5. Spannfutter (23) nach einem der Ansprüche 1 bis 4, **dadurch gekennzeichnet, dass** eine Nut (12) im Stellglied (2) ausgebildet ist, die der Aufnahme des nach außen verstellbaren Segments (6) dient.

6. Spannfutter (23) nach einem der Ansprüche 1 bis 5 **dadurch gekennzeichnet, dass** das Segment (6) gleichmäßig über den Umfang verteilt, in mehrfacher Ausführung, mit einer korrespondierenden Anzahl von Führungsmitteln (11) und Lagergliedern (8) versehen, vorgesehen ist, dass der Deckel (9) eine der Führungsmittel (11) äquivalente Anzahl an Führungslanglöchern (10) aufweist und dass das Stellglied (2) eine korrespondierende Anzahl an Nuten (12), oder eine radial über den inneren Umfang des Stellglieds (2) verlaufende Nut (12) besitzt.

7. Spannfutter (23) nach einem der Ansprüche 1 bis 6 **dadurch gekennzeichnet, dass** der Futterkörper (3) ein Fixiermittel (13) besitzt, und dass ein Spannmittelkörper (14) des Spannmittels (24) eine Führungsnut (15) aufweist, die eine translatorische und rotatorische Verstellung des Fixiermittels (13) bei Verdrehung des Spannmittels (24) ermöglicht.

8. Spannfutter (23) nach einem der Ansprüche 1 bis 7, **dadurch gekennzeichnet, dass** das Spannmittel (24) ein federndes Druckstück (16) in einer Druckstückaufnahme (17) besitzt, das bei Drehung des Spannmittels (24) relativ zur Drehscheibe (4) in eine Aussparung (18) der Drehscheibe (4) gleitet und der Ausrichtung der Drehscheibe (4) und des Sperrgliedes (5) gegenüber dem Spannfutter (23) dient.

9. Spannmittel (24) mit einem Spannmittelkörper (14), einem im Spannmittelkörper (14) befindlichen Zapfenkörper (19) und einem Spannelement (20) **dadurch gekennzeichnet, dass** am gegenüberliegenden Ende des Spannelements (20) eine Verschließeinheit (25) angeordnet ist, die der Zapfenkörper (19) trägt, und dass die Verschließeinheit (25) aus einer Anordnung von einer Drehscheibe (4), der ein Sperrglied (5) zugeordnet ist, mindestens einem nach außen verstellbaren Segment (6) und einem Deckel (9) besteht.

10. Spannmittel (24) nach Anspruch 9, **dadurch gekennzeichnet, dass** das Sperrglied (6) seitlich aus der Drehscheibe (4) herausragt und dass die Drehscheibe (4) mittels eines Lagerglieds (8) mit dem Segment (6) verbunden ist.

11. Spannmittel (24) nach Anspruch 9 oder 10, **dadurch gekennzeichnet, dass** der Deckel (9) mittels eines Verbindungsgliedes (21) mit dem Zapfenkörper (19) zur Ausrichtung des Deckels (9) verbunden ist.

12. Spannmittel (24) nach einem der Ansprüche 9 bis 11, **dadurch gekennzeichnet, dass** der Spannmittelkörper (14) an der gegenüberliegenden Seite des Spannelements (20) eine konusförmige Form aufweist und dass der Spannmittelkörper (14) eine Führungsnut (15) besitzt.

13. Spannmittel (24) nach einem der Ansprüche 9 bis 12, **dadurch gekennzeichnet, dass** das Segment (6) und die Drehscheibe (4) ein koppelndes Lagerglied (8) aufweisen, dass das Spannmittel (24) einen Deckel (9) mit einem Führungslangloch (10) besitzt und dass das Segment (6) ein axial angeordnetes Führungsmittel (11) aufweist.

14. Spannmittel (24) nach einem der Ansprüche 9 bis 13, **dadurch gekennzeichnet, dass** das Segment (6) als Rastklinke (26) in Form eines Teilkreissegmentes gebildet ist.

15. Spannmittel (24) nach Anspruch 13, **dadurch gekennzeichnet, dass** das Segment (6) gleichmäßig über den Umfang verteilt in mehrfacher Ausführung, mit einer korrespondierenden Anzahl von Führungsmitteln (11) und Lagergliedern (8) versehen, vorgesehen ist und dass der Deckel (9) eine der Anzahl der Führungsmittel (11) äquivalente Anzahl an Führungslanglöchern (10) aufweist.

16. Spannmittel (24) nach einem der Ansprüche 9 bis 15, **dadurch gekennzeichnet, dass** der Zapfenkörper (19) ein federndes Druckstück (16) in einer Druckstückaufnahme (17) aufweist, das bei Drehung des Spannmittels (24) relativ zur Drehscheibe (4) in eine Aussparung (18) der Drehscheibe (4) gleitet.

## Claims

1. Chuck (23) with a chuck body (3) having a guide opening (1) and an actuating element (2), and with at least one interchangeable clamping means (24) that can be inserted into the guide opening (1), **characterized in that** the clamping means (24) has associated therewith a rotary disk (4) with a blocking element (5) that secures the rotary disk (4) against rotation relative to the chuck body (3) during insertion of the clamping means (24) into the guide opening (1), and **in that** upon a rotation of the clamping means (24) about the longitudinal axis in the guide opening (1), a segment (6) can be displaced outward toward the chuck body (3) by means of the rotation relative to the rotary disk (4) for detachable securing of the clamping means (24) on the chuck body (3).

2. Chuck (23) according to claim 1, **characterized in that** the chuck body (3) has a radially formed blocking element receptacle (7) for the blocking element (5) projecting laterally from the rotary disk (4).

3. Chuck (23) according to one of claims 1 and 2, **characterized in that** the segment (6) and the rotary disk (4) have a bearing element (8) coupling them, **in that** the clamping means (24) has a cover (9) with a guide slot (10), and **in that** the segment (6) has a guide means (11) that is moved in the guide slot (10) during a rotational motion of the clamping means (24).

4. Chuck (23) according to one of claims 1 to 3, **characterized in that** the segment (6) is implemented as a latch (26) in the form of a segment of a reference circle.

5. Chuck (23) according to one of claims 1 to 4, **characterized in that** a groove (12) that serves to receive the outward-movable segment (6) is formed in the actuating element (2).

6. Chuck (23) according to one of claims 1 to 5, **characterized in that** the segment (6) is provided in multiple instances that are uniformly distributed over the circumference and are provided with a corresponding number of guide means (11) and bearing elements (8), **in that** the cover (9) has a number of guide slots (10) equivalent to the guide means (11), and **in that** the actuating element (2) has a corresponding number of grooves (12), or one groove (12) extending radially over the inner circumference of the actuating element (2).

7. Chuck (23) according to one of claims 1 to 6, **characterized in that** the chuck body (3) has a securing means (13), and **in that** a clamping means body (14) of the clamping means (24) has a guide slot (15) that permits translational and rotational motion of the securing means (13) during rotation of the clamping means (24).

8. Chuck (23) according to one of claims 1 to 7, **characterized in that** the clamping means (24) has an elastic thrust piece (16) in a thrust piece receptacle (17), which slides into a recess (18) of the rotary disk (4) during rotation of the clamping means (24) relative to the rotary disk (4) and serves to align the rotary disk (4) and the blocking element (5) relative to the chuck (23).

9. Clamping means (24) with a clamping means body (14), a pivot body (19) located in the clamping means body (14), and a chucking element (20), **characterized in that** a locking unit (25) that carries the pivot body (19) is located at the opposite end of the clamping element (20), and **in that** the locking unit (25) comprises an arrangement consisting of a rotary disk (4) with which a blocking element (5) is associated, at least one outward-movable segment (6), and a cover (9).

10. Clamping means (24) according to claim 9, **characterized in that** the blocking element (6) projects laterally from the rotary disk (4), and **in that** the rotary disk (4) is connected to the segment (6) by means of a bearing element (8).

11. Clamping means (24) according to claim 9 or 10, **characterized in that** the cover (9) is connected to the pivot body (19) by means of a connecting member (21) for aligning the cover (9).

12. Clamping means (24) according to one of claims 9 to 11, **characterized in that** the clamping means body (14) has a conical shape on the opposite side of the clamping element (20), and **in that** the clamping means body (14) has a guide slot (15).

13. Clamping means (24) according to one of claims 9 to 12, **characterized in that** the segment (6) and the rotary disk (4) have a bearing element (8) coupling them, **in that** the clamping means (24) has a cover (9) with a guide slot (10), and **in that** the segment (6) has an axially located guide means (11).

14. Clamping means (24) according to one of claims 9 to 13, **characterized in that** the segment (6) is implemented as a latch (26) in the form of a segment of a reference circle.

15. Clamping means (24) according to claim 13, **characterized in that** the segment (6) is provided in multiple instances that are uniformly distributed over the circumference and are provided with a corresponding number of guide means (11) and bearing elements (8), and **in that** the cover (9) has a number of guide slots (10) equivalent to the number of guide means (11).

16. Clamping means (24) according to one of claims 9 to 15, **characterized in that** the pivot body (19) has an elastic thrust piece (16) in a thrust piece receptacle (17) that slides into a recess (18) of the rotary disk (4) during rotation of the clamping means (24) relative to the rotary disk (4).

## Revendications

1. Mandrin de serrage (23), comprenant un corps de mandrin (3) présentant une ouverture de guidage (1) et un élément de réglage (2), et comprenant au moins un dispositif de serrage (24) échangeable qui peut être engagé dans l'ouverture de guidage (1), **caractérisé en ce qu'**est associé au dispositif de serrage (24), un disque rotatif (4) doté d'un élément de blocage (5) qui, lors de l'engagement du dispositif de serrage (24) dans l'ouverture de guidage (1), immobilise le disque rotatif (4) en rotation par rapport au corps de mandrin (3), et **en ce que** lors d'une rotation du dispositif de serrage (24) autour de l'axe longitudinal dans l'ouverture de guidage (1), la rotation relative par rapport au disque rotatif (4) permet de déplacer une segment (6) vers l'extérieur, en direction du corps de mandrin (3), en vue de l'immobilisation libérable du dispositif de serrage (24) sur le corps de mandrin (3).

2. Mandrin de serrage (23) selon la revendication 1, **caractérisé en ce que** le corps de mandrin (3) présente un logement d'élément de blocage (7), réalisé dans la direction radiale, pour l'élément de blocage (5) dépassent latéralement du disque rotatif (4).

3. Mandrin de serrage (23) selon l'une des revendications 1 et 2, **caractérisé en ce que** le segment (6) et le disque rotatif (4) présentent un élément de support (8) assurant un accouplement, **en ce que** le dispositif de serrage (24) possède un couvercle (9) doté d'un trou de guidage oblong (10), et **en ce que** le segment (6) présente un moyen de guidage (11) qui est déplacé dans le trou de guidage oblong (10) lors d'un mouvement rotatif du dispositif de serrage (24).

4. Mandrin de serrage (23) selon l'une des revendications 1 à 3, **caractérisé en ce que** le segment (6) est réalisé comme cliquet d'arrêt (26), sous la forme d'un segment en arc de cercle.

5. Mandrin de serrage (23) selon l'une des revendications 1 à 4, **caractérisé en ce qu'**il est prévu, dans l'élément de réglage (2), une rainure (12) qui sert à recevoir le segment (6) prouvant être déplacé vers l'extérieur.

6. Mandrin de serrage (23) selon l'une des revendications 1 à 5, **caractérisé en ce que** le segment (6) est prévu plusieurs fois, dans une répartition régulière sur la périphérie, et est doté d'un nombre correspondant de moyens de guidage (11) et d'éléments de support (8), **en ce que** le couvercle (9) présente un nombre de trous de guidage oblongs (10) qui est équivalent à celui des moyens de guidage (11), et **en ce que** l'élément de réglage (2) possède un nombre correspondant de rainures (12) ou une rainure (12) s'étendant radialement sur la périphérie intérieure de l'élément de réglage (2).

7. Mandrin de serrage (23) selon l'une des revendications 1 à 6, **caractérisé en ce que** le corps de mandrin (3) possède un moyen de positionnement (13), et **en ce qu'**un corps de dispositif de serrage (14) du dispositif de serrage (24) présente une rainure de guidage (15) qui autorise un déplacement translatoire et rotatoire du moyen de positionnement (13) lors de la rotation du dispositif de serrage (24).

8. Mandrin de serrage (23) selon l'une des revendications 1 à 7, **caractérisé en ce que** le dispositif de serrage (24) possède une pièce de pression (16) élastique qui se trouve dans un logement de pièce de pression (17) et, lors de la rotation du dispositif de serrage (24) par rapport au disque rotatif (4), glisse dans un évidement (18) du disque rotatif (4) et sert à l'orientation du disque rotatif (4) et de l'élément de blocage (5) par rapport au mandrin de serrage (23).

9. Dispositif de serrage (24), comprenant un corps de dispositif de serrage (14), un corps formant tenon (19), se trouvant dans le corps de dispositif de serrage (14), et un élément de serrage (20), **caractérisé en ce qu'**à l'extrémité opposée de l'élément de serrage (20), il est prévu une unité de fermeture (25) qui est portée par le corps formant tenon (19), et **en ce que** l'unité de fermeture (25) se compose d'un agencement comprenant un disque rotatif (4), auquel est associé un élément de blocage (5), d'au moins un segment (6) prouvant être déplacé vers l'extérieur, et d'un couvercle (9).

10. Dispositif de serrage (24) selon la revendication 9, **caractérisé en ce que** l'élément de blocage (6) dépasse latéralement du disque rotatif (4), et **en ce que** le disque rotatif (4) est relié au segment (6) au moyen d'un élément de support (8).

11. Dispositif de serrage (24) selon la revendication 9 ou 10, **caractérisé en ce que** le couvercle (9) est relié au moyen d'un élément de liaison (21) au corps formant tenon (19), en vue de l'orientation du couvercle (9).

12. Dispositif de serrage (24) selon l'une des revendications 9 à 11, **caractérisé en ce que**, sur le côté opposé de l'élément de serrage (20), le corps de dispositif de serrage (14) présente une forme conique, et **en ce que** le corps de dispositif de serrage (14) possède une rainure de guidage (15).

13. Dispositif de serrage (24) selon l'une des revendications 9 à 12, **caractérisé en ce que** le segment (6) et le disque rotatif (4) présentent un élément de support (8) assurant un accouplement, **en ce que** le dispositif de serrage (24) possède un couvercle (9) doté d'un trou de guidage oblong (10), et **en ce que** le segment (6) présente un moyen de guidage (11) disposé de façon axiale.

14. Dispositif de serrage (24) selon l'une des revendications 9 à 13, **caractérisé en ce que** le segment (6) est réalisé comme cliquet d'arrêt (26), sous la forme d'un segment en arc de cercle.

15. Dispositif de serrage (24) selon la revendication 13, **caractérisé en ce que** le segment (6) est prévu plusieurs fois, dans une répartition régulière sur la périphérie, et est doté d'un nombre correspondant de moyens de guidage (11) et d'éléments de support (8), et **en ce que** le couvercle (9) présente un nombre de trous de guidage oblongs (10) qui est équivalent à celui des moyens de guidage (11).

16. Dispositif de serrage (24) selon l'une des revendications 9 à 15, **caractérisé en ce que** le corps formant tenon (19) présente une pièce de pression (16) élastique qui se trouve dans un logement de pièce de pression (17) et, lors de la rotation du dispositif de serrage (24) par rapport au disque rotatif (4), glisse dans un évidement (18) du disque rotatif (4).
